# EUROPÄISCHE PATENTSCHRIFT

(11) **EP 2 332 779 B1**
(45) Veröffentlichungstag und Bekanntmachung des Hinweises auf die Patenterteilung: **03.12.2014**
(21) Anmeldenummer: 10013876.7
(22) Anmeldetag: 22.10.2010
(51) Int. Cl.: B60R 7/14, F41A 23/26, F41C 33/06, A47B 81/00

(54) **Waffenkasten zur Befestigung in einem Kraftfahrzeug**
Weapon box for fixing in a motor vehicle
Caisse d'armes pour la fixation dans un véhicule automobile

(30) Priorität: 11.12.2009 DE 102009057793
(43) Veröffentlichungstag der Anmeldung: 15.06.2011
(73) Patentinhaber: KAMEI automotive GmbH, 38448 Wolfsburg (DE)
(72) Erfinder: Schulze, Dirk, 29378 Wittingen (DE)
(74) Vertreter: Friedrich, Andreas

(56) Entgegenhaltungen:
- DE-A1- 2 905 835
- US-A- 3 780 487
- US-A- 4 936 038
- US-A- 5 375 440
- US-A- 5 438 787

## Beschreibung

Die Erfindung betrifft einen Waffenkasten mit einer in einem Kraftfahrzeug befestigbaren Grundschale und einem abschließbaren Deckel

Ein derartiger Waffenkasten ist aus der DE 197 23 326 A1 bekannt. Aus der Druckschrift ist eine Halterung für ein Gewehr, eine Pistole oder einen Revolver bekannt, die in einem Fahrzeug angebracht werden kann. Diese Halterung ist im Kofferraum fixiert und besteht aus einer Grundplatte und einer Verschlussplatte. Über abschließbare Bolzen ist die Verschlussplatte mit der Grundplatte verbindbar. Die Verschlussplatte deckt die Waffe ab, so dass diese in dem Fahrzeug sicher aufbewahrt werden kann. Diese Halterung ist vorgesehen, damit eine Jagdwaffe im Auto gesichert wird, wenn der Jäger sein Fahrzeug verlässt. Die zum Sichern der Waffe bzw. zum Entnehmen der Waffe aus der Halterung notwendige Zeit kann dabei unbeachtlich bleiben. Hauptziel ist es nur, die Waffe gegen unbefugte Entnahme zu sichern.

Waffen werden auch in Einsatzfahrzeugen beispielsweise der Polizei mitgeführt. Auch diese Waffen müssen gegen eine unbefugte Entnahme gesichert werden. Im Notfall muss aber ein rascher Zugriff auf die Waffe möglich sein. Die Zeit, die benötigt wird, um die Waffe aus dem Waffenkasten entnehmen zu können, spielt hier durchaus eine Rolle. Der Waffenkasten ist beispielsweise in die vordere Türverkleidung des Streifenwagens integriert oder wird an einer Wandung im Kofferraum befestigt.

Aus der DE 29 05 835 A1 ist ein aus Stahlblech gefertigter Waffenkoffer bekannt, der als Bereitschaftskoffer ausgebildet ist und am Kofferkörper für die Montage am Fahrzeug Halterungseinsätze aufweist, die mit einem fest im Fahrzeug verankerten Traggestell verbindbar sind.

Aus der DE 91 04 611 U1 ist ein Waffenkasten bekannt, der über eine Schwenkhalterung an der umklappbaren Rücksitzlehne eines Personenwagens befestigbar ist. Ist die Lehne in ihrer aufrechten Stellung, ist der Waffenkasten unsichtbar. Die Rückenlehne ist fernbetätigt entriegelbar und fällt dann über eine aufwändige Kinematik veranlasst auf das Sitzpolster, so dass der Waffenkasten zugänglich ist.

Aus der DE 29 25 186 A1 ist eine Haltevorrichtung für ein Gewehr bekannt, die an der Innenseite einer Kraftfahrzeugtür befestigt werden kann. Dabei wird das Gewehr an zwei Haltepunkten, von denen sich einer am Lauf des Gewehrs und einer am Schaft befindet, an der Tür des Kraftfahrzeugs fixiert. An dem Haltepunkt, der sich am Schaft des Gewehrs befindet, ist ein Schnappverschluss angeordnet. Wird das Gewehr mit seinem Schaft in diesen Verschluss eingedrückt, schnappt dieser Verschluss automatisch ein und verriegelt, so dass das Gewehr sicher in der Halterung fixiert ist.

Die US 4,936,038 offenbart eine Aufbewahrungsvorrichtung für Handfeuerwaffen, die aus zwei Rahmen besteht, die übereinander angeordnet sind. Ziel ist es, eine Waffe so aufzubewahren, dass sie von außen nicht erkennbar ist. Dazu ist die Oberseite des oberen Rahmens mit einer Dekoration oder einem Bild versehen, so dass ein Betrachter einen an einer Wand befestigten derartigen Waffenkasten lediglich als Bild wahrnimmt. Der obere Rahmen ist über Scharniere am unteren Rahmen befestigt, in dem sich die eigentliche Handfeuerwaffe befindet.

Aus der US 3,780,487 ist gattungsgemäß ein Kasten für eine Waffe bekannt, der beispielsweise als Versandkarton benutzt werden kann. Hierfür sind in der Grundschale des Kastens zwei und im Deckel des Kastens zumindest ein weiteres Lagerelement vorgesehen, um einen sicheren Halt der Waffe im Kasten zu gewährleisten. Zwei der Lagerelemente lagern die Waffe an ihren Handgriffen, von denen sich einer am Lauf der Waffe befindet.

Aus der US 5,438,787 ist eine Halterung für ein Gewehr bekannt, bei der das Gewehr an zwei Stellen gelagert wird. Eine der Lagerstellen ist am Abzug des Gewehrs vorgesehen, durch die der Abzug gleichzeitig überdeckt wird, um ein versehentliches Auslösen der Waffe, sicher zu verhindern. Das Gewehr wird zudem an einer zweiten Stelle gelagert, an der der Lauf in eine Klemmvorrichtung eingesetzt wird, die durch ein Schloss gesichert ist. Die Klemmvorrichtung besteht aus einem oberen und einem unteren Klemmbacken, die voneinander weg bewegt werden können, wenn das Schloss aufgeschlossen ist. In diesem Fall lässt sich das Gewehr aus der Halterung einfach entnehmen.

Die US 5, 375,440 offenbart einen Waffenkasten, beispielsweise für Pistolen, bei denen im Deckel des Kastens ein Loch vorgesehen ist. In der Grundschale des Kastens befindet sich eine zylindrische hohle Erhebung, über die die zu verstauende Waffe, beispielsweise eine Pistole, mit dem Abzug bestückt wird. Im Inneren dieser zylindrischen Erhebung befindet sich ein Schließelement, das nach oben aus der Erhebung herausragt, diese jedoch nicht verlassen kann. Beim Schließen des Waffenkastens ragt das Schließelement durch das Loch im Deckel und kann auf diese Weise mit einem Schloss gesichert werden.

Aus der US 5,621,996 ist eine Vorrichtung bekannt, mit der Handfeuerwaffen sicher an einer Wand befestigt werden können. Die Vorrichtung umfasst dabei ein paar zueinander korrespondierender Gehäuseteile, die zur Aufnahme des Bereichs der Handfeuerwaffen bestimmt sind, in dem sich der Abzug befindet. Die Gehäuseteile sind zudem an der Wand befestigbar.

Der Erfindung liegt die Aufgabe zugrunde, einen Waffenkasten zu schaffen, der in einem Kraftfahrzeug befestigbar ist, in dem sicher eine Waffe, insbesondere ein Maschinengewehr oder eine Maschinenpistole aufgenommen werden kann und der so ausgebildet ist, dass ein rascher Zugriff auf die Waffe möglich ist.

Die Aufgabe wird durch einen Waffenkasten mit einer in einem Kraftfahrzeug befestigbaren Grundschale, einem daran schwenkbar befestigten, abschließbaren Deckel und mindestens zwei in der Grundschale vorgesehenen Lagerböcken zur Lagerung einer Waffe an ihrem Handgriff, von denen einer an seiner von der Grundschale wegweisenden Seite mit einer Lasche versehen ist, die schräg in Richtung des Deckels ausläuft, gelöst, wobei sich eine in dem Waffenkasten befindende Waffe gegen die Lasche anlegt, wenn der Waffenkasten geöffnet wird.

Beim Öffnen des Deckels fällt die Waffe nach vorn auf die schräg stehende Lasche. Sie ist damit vom Boden der Grundschale frei und sehr leicht zu greifen und aus dem Waffenkasten zu entnehmen.

Die Lasche ist vorzugsweise an den Lagerbock angeschraubt oder angenietet. Der Winkel zwischen dem Boden der Grundschale und der Lasche beträgt vorzugsweise 10 bis 30 Grad.

Um im Waffenkasten auch Munitionsmagazine verwahren zu können, ist vorzugsweise mindestens eine Halterung in der Grundschale vorgesehen. Insbesondere vorzugsweise sind mindestens vier Munitionsmagazine in dem Waffenkasten aufnehmbar.

Um die Waffe noch sicherer zu lagern, ist vorzugsweise oberhalb des mit der Lasche versehenen Lagerbocks eine Schließeinrichtung vorgesehen, die im Wesentlichen zylindrisch mit einem in Richtung des Deckels weisenden Ringflansch ausgebildet sein kann. Diese Schließeinrichtung, die mit einem Schloss versehen ist, kann die Waffe zusätzlich am Abzug sichern, so dass der Zugriff auf die Waffe auch dann verwehrt ist, wenn der Waffenkasten durch Unbefugte aufgebrochen wird.

Um eine sichere Befestigung des Waffenkastens im Fahrzeug zu gewährleisten, kann auf der Außenseite des Bodens der Grundschale eine Stahlplatte oder eine Platte aus einem hochwertigen Kunststoff, insbesondere AcrylnitrilButadien-Styrol-Copolymere (ABS) befestigt sein.

Wenn der Deckel mit einem über seine nahezu volle Länge reichenden Scharnier an der Grundschale befestigt ist, ist eine sichere und vor allen Dingen haltbare Verbindung hergestellt, die sich auch im Falle eines Aufpralls des Fahrzeuges nicht lösen kann, so dass die Waffe weiterhin gesichert bleibt. Vorzugsweise bestehen der Deckel und die Grundschale aus Kunststoff. Beide können über ein Sicherungsband oder dergleichen miteinander verbunden sein, so dass der Öffnungsweg des Deckels begrenzt ist.

Mit Hilfe einer Zeichnung sollen nachfolgend Ausführungsbeispiele der Erfindung näher erläutert werden. Es zeigt:

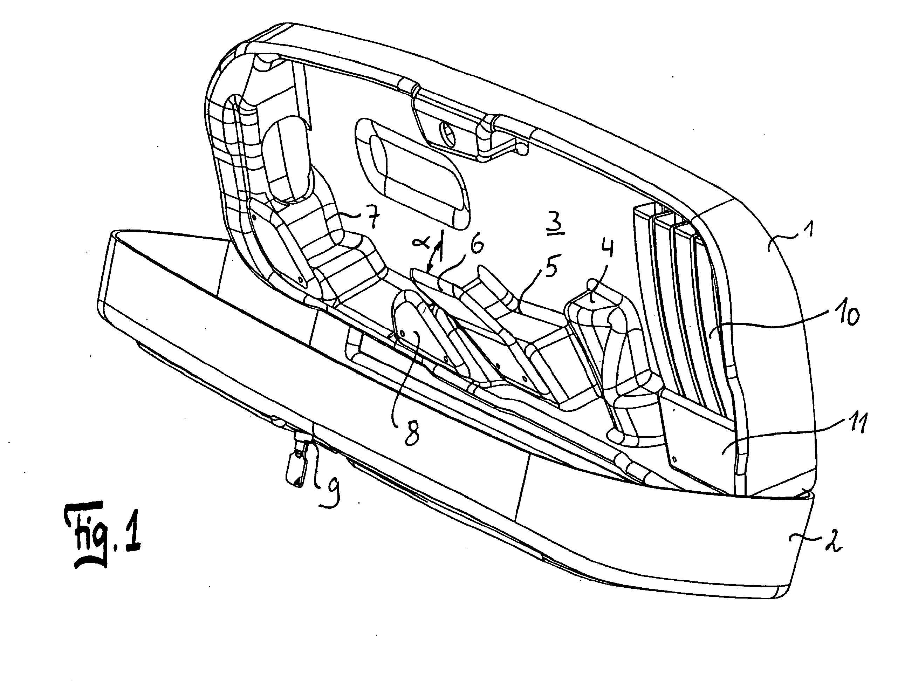

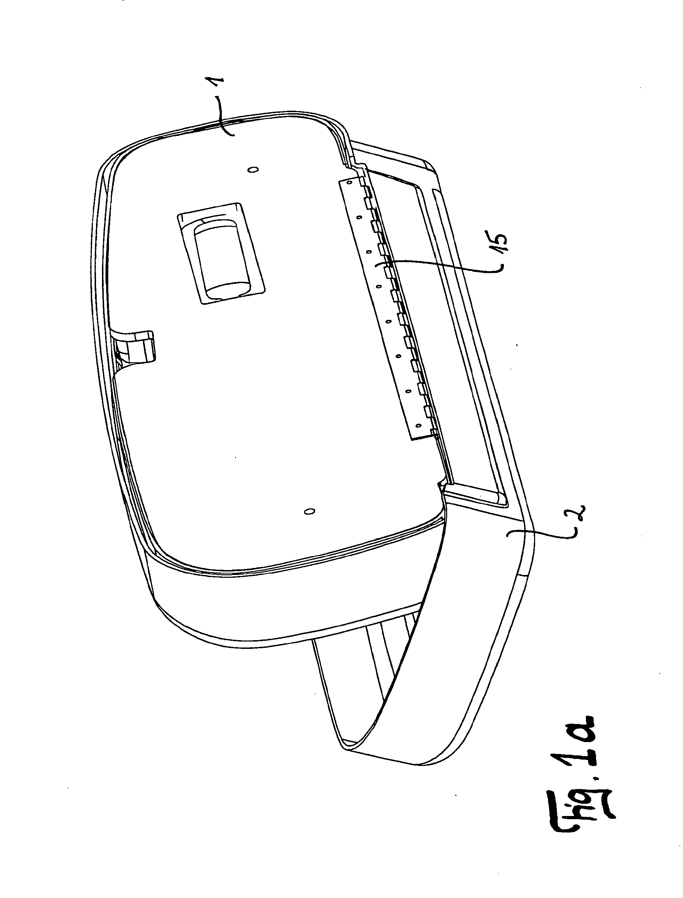

- Fig. 1: - die perspektivische Darstellung eines ersten geöffneten Waffenkastens;
- Fig. 1a: - eine weitere Darstellung des Waffenkastens nach Figur 1
- Fig. 2: - die perspektivische Darstellung eines zweiten geöffneten Waffenkastens;
- Fig. 2a: - der Waffenkasten nach Figur 2 mit eingelegter Waffe und anderer Anordnung des Magazinhalters;
- Fig. 3: - die perspektivische Darstellung eines dritten geöffneten Waffenkastens;

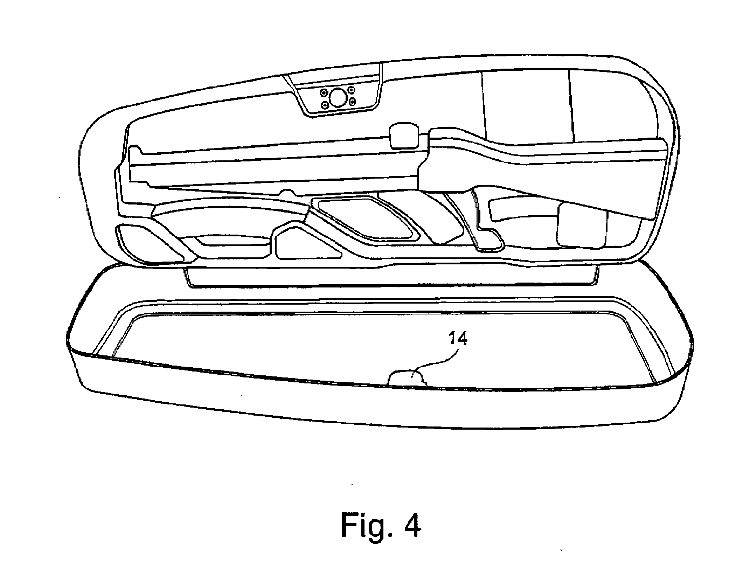

- Fig. 4: - den Waffenkasten nach Figur 2 mit eingelegter Waffe;

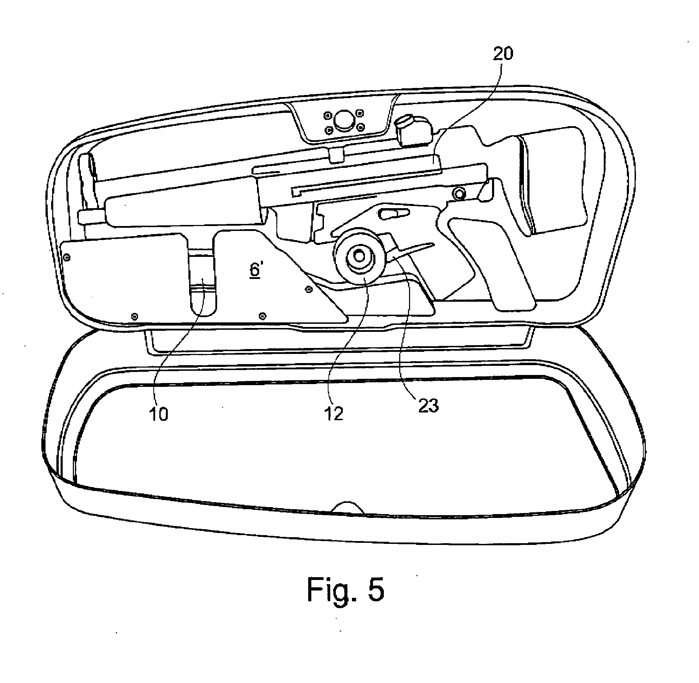

- Fig. 5: - den Waffenkasten nach Figur 3 mit eingelegter Waffe;

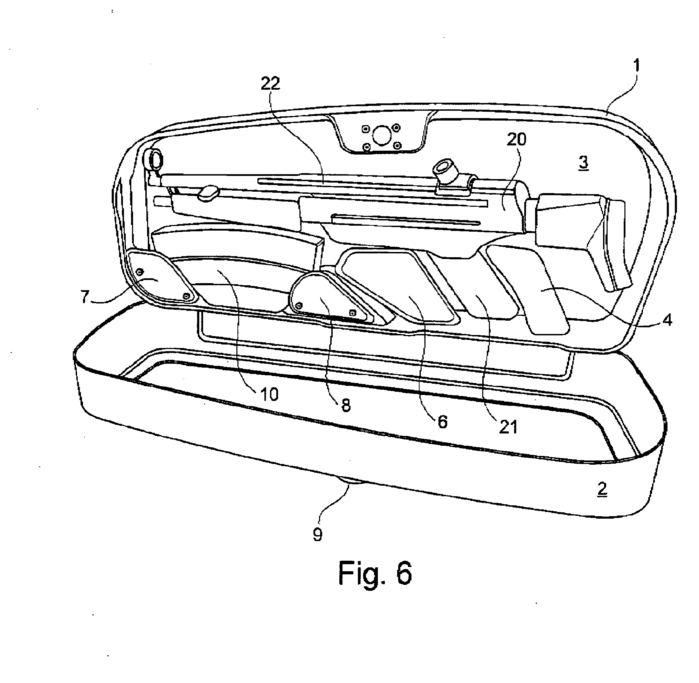

- Fig. 6: - einen weiteren Waffenkasten mit eingelegter Waffe;

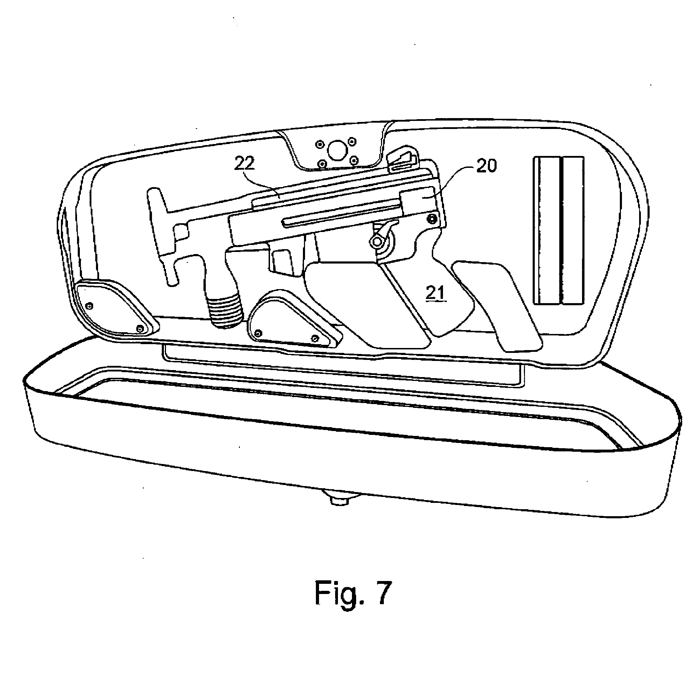

- Fig. 7: - ein weiteres Ausführungsbeispiel eines Waffenkastens mit eingelegter Waffe.

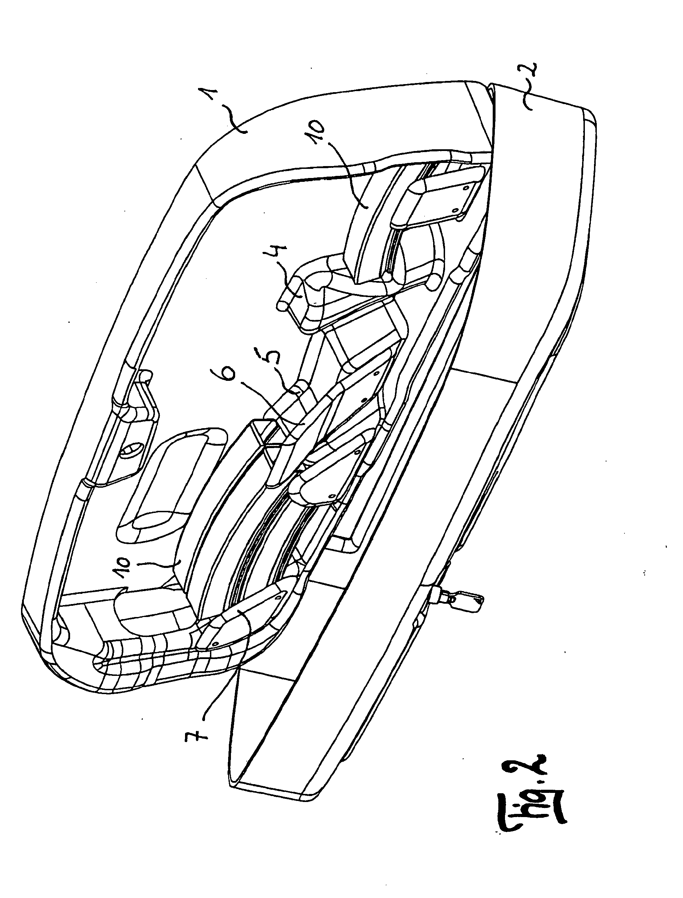

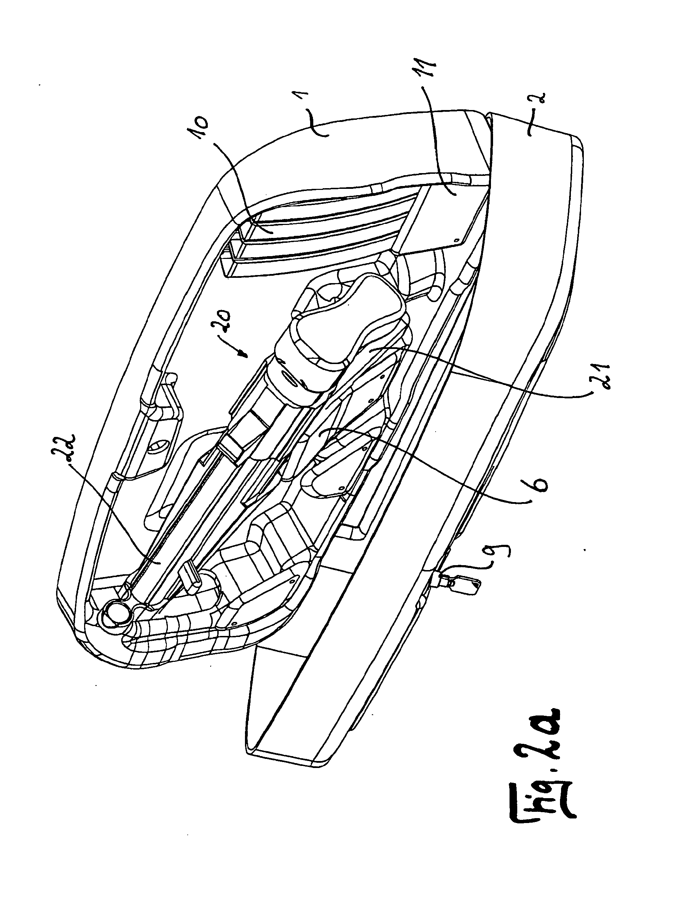

Der Waffenkasten besteht aus der Grundschale 1 und dem über ein Scharnier 15 mit der Grundschale 1 schwenkbar befestigten Deckel 2. Die Grundschale 1 kann fest mit dem Fahrzeug verbunden werden. In ihrem Inneren sind am Boden 3 zwei Lagerböcke 4, 5 vorgesehen, zwischen denen die Waffe 20 an ihrem Handgriff 21 gelagert werden kann. Am in Richtung des Laufs 22 der Waffe 20 betrachteten vorderen Lagerbock 5 ist eine den Lagerbock 5 überragende Lasche 6 angenietet, die in einem Winkel α von 10 bis 30 Grad schräg nach außen in Richtung des Deckels 2 abgewinkelt verläuft. Gegen diese abgewinkelte Lasche 6 legt sich die Waffe 20 an, wenn der Waffenkasten geöffnet wird, so dass die Waffe 20 vom Boden 3 der Grundschale 1 absteht und leicht gegriffen und aus den Lagerböcken 4, 5 herausgenommen werden kann. Neben dem hinteren Lagerbock 4 ist eine Halterung 11 vorgesehen, in die mehrere Munitionsmagazine 10 eingesetzt werden können. Wie Figur 2 zeigt, können die Munitionsmagazine 10 auch zwischen den Lagerbock 5 und dem weiteren Lagerbock 7 eingelegt werden.

Im Deckel 2 ist ein Schloss 9 integriert, über das der Waffenkasten abgeschlossen werden kann, so dass die Waffe Unbefugten nicht zugänglich ist. An der Innenseite des Deckels 2 ist ein komprimierbarer Stopfen 14 angeordnet, der bei geschlossenem Deckel 2 an der Waffe 20 anliegt, wodurch die Waffe 20 fest im Waffenkasten gelagert wird, und so Klappergeräusche vermieden werden. Zur Gewichtsersparnis sind sowohl die Grundschale 1 als auch der Deckel 2 aus einem schlagfesten Kunststoff, beispielsweise AcrylnitrilButadien-Styrol-Copolymere, gefertigt.

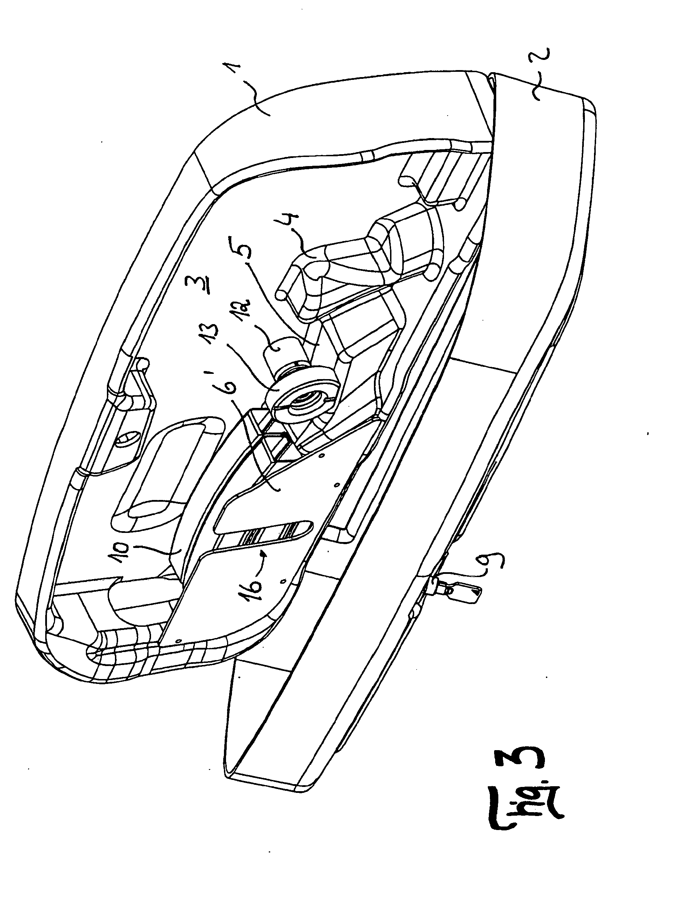

Figur 3 zeigt ein Ausführungsbeispiel eines Waffenkastens, bei dem oberhalb des Lagerbocks 5 eine zusätzliche Schließeinrichtung 12 vorgesehen ist, die zylindrisch mit einem vorderen Ringflansch 13 ausgebildet ist und die Waffe zusätzlich an ihrem Abzug 23 sichert. Die Schließeinrichtung 12 ist mit einem nicht dargestellten Zylinderschloss integriert. Mit der zusätzlichen Schließeinrichtung 12 soll sichergestellt werden, dass die Waffe nicht sofort entnehmbar ist, wenn der Waffenkasten aufgebrochen werden sollte. In dem Schlossdom ist eine Kegelschraube durch eine in das Fahrzeug integrierte Trennwandstahlplatte geschraubt, so dass die Schließeinrichtung 12 nicht einfach abgehebelt werden kann. Die schräg stehende Lasche 6' ist am Lagerbock 5 und im vorderen Bereich am Rand der Grundschale 1 vernietet. Zur Sicherung der Munitionsmagazine 10 ist die Lasche 6' weit nach oben geführt. Bei eingesetzter und über die Schließeinrichtung 12 gesicherter Waffe 20 können die Munitionsmagazine 10 nicht entnommen werden. Um eine Entnahme der Munitionsmagazine 10 zu erleichtern, wenn die Waffe 20 nicht eingesetzt ist, ist die Lasche 6' mit einem Schlitz 16 versehen, durch den die Munitionsmagazine 10 einseitig ergriffen werden können.

### Bezugszeichenliste

- 1: Grundschale
- 2: Deckel
- 3: Boden
- 4: Lagerbock
- 5: Lagerbock
- 6: Lasche
- 6': Lasche
- 7: Lagerbock
- 8: Lagerbock
- 9: Schloss
- 10: Munitionsmagazin
- 11: Halterung
- 12: Schließeinrichtung
- 13: Ringflansch
- 14: Stopfen
- 15: Scharnier
- 20: Waffe
- 21: Handgriff
- 22: Lauf
- 23: Abzug
- α: Winkel

## Patentansprüche

1. Waffenkasten mit einer in einem Kraftfahrzeug befestigbaren Grundschale (1), und einem abschließbaren Deckel (2) und mindestens zwei in der Grundschale (1) vorgesehenen Lagerböcken (4, 5) zur Lagerung einer Waffe (20) an ihrem Handgriff (21), wobei der Deckel schwenkbar an der Grundschale befestigt ist, **dadurch gekennzeichnet, dass** einer der Lagerböcke (5) an seiner von der Grundschale (1) wegweisenden Seite mit einer Lasche (6, 6') versehen ist, die schräg in Richtung des Deckels (2) ausläuft, wobei sich eine in dem Waffenkasten befindende Waffe (20) gegen die Lasche (6) anlegt, wenn der Waffenkasten geöffnet wird.

2. Waffenkasten nach Anspruch 1, **dadurch gekennzeichnet, dass** die Lasche (6, 6') an dem Lagerbock (5) angeschraubt oder angenietet ist.

3. Waffenkasten nach Anspruch 1 oder 2, **dadurch gekennzeichnet, dass** der Winkel α zwischen dem Boden (3) der Grundschale (1) und der Lasche (6, 6') 10 bis 30 Grad beträgt.

4. Waffenkasten nach einem der Ansprüche 1 bis 3, **gekennzeichnet durch** mindestens eine Halterung (11, 7, 8) zur Aufnahme von Munitionsmagazinen (10).

5. Waffenkasten nach Anspruch 4, **dadurch gekennzeichnet, dass** bis zu fünf Munitionsmagazine (10) aufnehmbar sind.

6. Waffenkasten nach einem der vorstehenden Ansprüche **gekennzeichnet durch** eine Schließeinrichtung (12) zum zusätzlichen Sichern der Waffe an deren Abzug, die oberhalb des mit der Lasche (6, 6') versehenen Lagerbocks (5) angeordnet ist.

7. Waffenkasten nach Anspruch 6, **dadurch gekennzeichnet, dass** die Schließeinrichtung (12) zylindrisch mit einem in Richtung des Deckels (2) weisenden Ringflansch (13) ausgebildet ist.

8. Waffenkasten nach einem der vorstehenden Ansprüche, **dadurch gekennzeichnet, dass** auf der Außenseite des Bodens (3) der Grundschale (1) eine Stahlplatte oder eine Kunststoffplatte aus ABS befestigt ist.

9. Waffenkasten nach einem der vorstehenden Ansprüche, **dadurch gekennzeichnet, dass** der Deckel (2) mit einem über seine nahezu volle Länge reichenden Scharnier (15) an der Grundschale (1) befestigt ist.

10. Waffenkasten nach einem der vorstehenden Ansprüche, **dadurch gekennzeichnet, dass** der Deckel (2) und die Grundschale (1) aus Kunststoff bestehen.

11. Waffenkasten nach einem der vorstehenden Ansprüche, in dem sich eine Waffe befindet.

## Claims

1. Weapon box with a basic tray (1) fixable in a motor vehicle and with a closeable lid (2) and at least two bearing blocks (4, 5), provided in the basic tray (1), for mounting a weapon (20) at its handle (21), the lid being fixed pivotably to the basic tray, **characterized in that** one of the bearing blocks (5) is provided, on its side pointing away from the basic tray (1), with a tab (6, 6') which runs out obliquely in the direction of the lid (2), a weapon (20) located in the weapon box coming to bear against the tab (6) when the weapon box is opened.

2. Weapon box according to Claim 1, **characterized in that** the tab (6, 6') is screwed or riveted to the bearing block (5).

3. Weapon box according to Claim 1 or 2, **characterized in that** the angle α between the bottom (3) of the basic tray (1) and the tab (6, 6') amounts to 10 to 30 degrees.

4. Weapon box according to one of Claims 1 to 3, **characterized by** at least one holding device (11, 7, 8) for the accommodating of ammunition magazines (10).

5. Weapon box according to Claim 4, **characterized in that** up to five ammunition magazines (10) can be accommodated.

6. Weapon box according to one of the preceding claims, **characterized by** a closing arrangement (12) for additionally securing the weapon at its trigger, the said closing arrangement being disposed above the bearing block (5) provided with the tab (6, 6').

7. Weapon box according to Claim 6, **characterized in that** the closing arrangement (12) is formed cylindrically with an annular flange (13) pointing in the direction of the lid (2).

8. Weapon box according to one of the preceding claims, **characterized in that** a steel plate or a plastic plate made from ABS is fixed on the outside of the bottom (3) of the basic tray (1).

9. Weapon box according to one of the preceding claims, **characterized in that** the lid (2) is fixed to the basic tray (1) by means of a hinge (15) extending over virtually the entire length of the said lid.

10. Weapon box according to one of the preceding claims, **characterized in that** the lid (2) and the basic tray (1) consist of plastic.

11. Weapon box according to one of the preceding claims, in which a weapon is located.

## Revendications

1. Caisse d'armes comprenant une coque de base (1) susceptible d'être fixée dans un véhicule automobile, et un couvercle refermable (2) et au moins deux blocs récepteurs (4, 5) prévus dans la coque de base (1) pour recevoir une arme (20) au niveau de sa crosse (21), dans laquelle le couvercle est fixé de manière pivotante sur la coque de base, **caractérisée en ce que** l'un des blocs récepteurs (5) est doté d'une patte (6, 6') sur son côté détourné de la coque de base (1), patte qui s'étend en oblique en direction du couvercle (2), de sorte qu'une arme (20) qui se trouve dans la caisse d'armes s'applique contre la patte (6) quand la caisse d'armes est ouverte.

2. Caisse d'armes selon la revendication 1, **caractérisée en ce que** la patte (6, 6') est vissée ou rivetée sur le bloc récepteur (5).

3. Caisse d'armes selon la revendication 1 ou 2, **caractérisée en ce que** l'angle α entre le fond (3) de la coque de base (1) et la patte (6, 6') est de 10 à 30°.

4. Caisse d'armes selon l'une des revendications 1 à 3, **caractérisée par** au moins une monture (11, 7, 8) pour la réception de magasins à munitions (10).

5. Caisse d'armes selon la revendication 4, **caractérisée en ce qu'**elle est capable de recevoir jusqu'à cinq magasins à munitions (10).

6. Caisse d'armes selon l'une des revendications précédentes, **caractérisée par** un système de fermeture (12) pour sécuriser additionnellement l'arme au niveau de sa gâchette, et qui est agencé au-dessus du bloc récepteur (5) doté de la patte (6, 6').

7. Caisse d'armes selon la revendication 6, **caractérisée en ce que** le système de fermeture (12) est réalisé sous forme cylindrique avec une bride annulaire (13) tournée en direction du couvercle (2).

8. Caisse d'armes selon l'une des revendications précédentes, **caractérisée en ce qu'**une plaque en acier ou une plaque en matière plastique en ABS est fixée sur la face extérieure du fond (3) de la coque de base (1).

9. Caisse d'armes selon l'une des revendications précédentes, **caractérisée en ce que** le couvercle (2) est fixé sur la coque de base (1) au moyen d'une charnière (15) qui s'étend pratiquement sur la totalité de sa longueur.

10. Caisse d'armes selon l'une des revendications précédentes, **caractérisée en ce que** le couvercle (2) et la coque de base (1) sont en matière plastique.

11. Caisse d'armes selon l'une des revendications précédentes, dans laquelle se trouve une arme.
